# EUROPEAN PATENT APPLICATION

(11) **EP 2 116 957 A1**
(43) Date of publication of application: **11.11.2009**
(21) Application number: 08724085.9
(22) Date of filing: 13.02.2008
(51) Int. Cl.: G06K 1/00, G06K 5/00, G09F 3/00

(54) **METHOD FOR RECORDING SALES PROMOTION AND AN IDENTIFIER FOR CARRYING OUT SAID METHOD**

(30) Priority: 15.02.2007 RU 2007105571
(71) Applicant: Pavlov, Dmitry Fedorovich, St.Petersburg, 105257 (RU); Maslyaev, Maksim Konstantinovich, St.Petersburg, 194356 (RU); Larin, Vladimir Viktorovich, Respublika Mary El 425005 (RU)
(72) Inventor: Pavlov, Dmitry Fedorovich, St.Petersburg, 105257 (RU); Maslyaev, Maksim Konstantinovich, St.Petersburg, 194356 (RU); Larin, Vladimir Viktorovich, Respublika Mary El 425005 (RU)
(74) Representative: Dunleavy, Kevin James
(86) International application number: PCT/RU2008/000081
(87) International publication number: WO 2008/100183

(57) **Abstract**

The Invention is an electronic system and may be used in production and sales as a tool providing information of a product authenticity. The presented follow-up technology includes the following steps:
a) one or more unique codes are assigned to each kind of goods at the production stage; b) the code(s) are based into the manufacturer's database; c) each of the unique codes assigned is marked on a separable strip having its own sequence number.

The technology presented shall be applied through the ID shown on Fig. 1. Card-shaped ID 1 can be made of plastic, cardboard, etc. ID card's 1 front shall accommodate all the information 2 necessary and also make a room for strips 3 described hereunder. Information 2 shall be printed on card 1 and be of the kind which can help in product's authenticity verification through the unique code marked on the relevant strip 3.

Each of strips 3 bears a unique code, which has been assigned to the kind of goods at or after the production stage. The code is concealed by the non-transparent layer, such as the protective lattice, which can be removed irreparably to reveal the unique code. Strips 3 are affixed to the front of card 1 one upon another or one after another. In order to facilitate the strip's separation off card 1 for each strip 3 extension tip 4 can be provided, which emerges loose from the surface of card 1. Either tips 4 or strips 3 bear sequence numbers.

## Description

### TECHNICAL FIELD

The Invention is an electronic system and may be used in production and sales as a tool providing information of a product authenticity and disposal dates, which may be required by purchasers/consumers or for manufacturer's marketing research.

### BACKGROUND ART

Many current methods based on relevant identification principles were devised for an aftersale follow-up of products' movement and distribution.

For instance, Russian patent for utility model No. 31730 (published on 27.08.2003) describes a label with a unique symbol combination and a strippable protective lattice on its backside, which is meant to be attached to the product package. Such symbols readout allows getting information of the product purchased. A simple ID like this, however, has a disadvantage of easy falsification and is therefore not dependable because of modern technologies, which make providing any infringing goods with fabricated ID's of such sort possible.

Higher level of protection can be achieved through the ID described in Russian patent for invention No. 2292587 (published on 27.01.2007). The ID in question has an additional r f marker, which can be read out by a specific reader. However, the weakness of this solution is that any person wishing to identify the product has to have the reader and the marker itself at hand.

Russian patent for utility model No. 24744 (published on 20.08.2002) presents the ID, which includes a transmitter-receiver system designed to communicate information to a user transmitter-receiver system after a challenge received. This system regrettably complicates the ID's structure.

Even more sophisticated type of marking is described in Russian patents for utility model No. 22715 (published on 20.04.2002) and invention No. 2281552 (published on 10.08.2006). The patents in question present product ID with an electronic digital signature (EDS) stored in its memory and verified while purchasing the product. The disadvantage here is a complex EDS verification system required to check the product purchased. Systems of that type are not legalized in the RF yet.

Solutions described in Russian patents for inventions No. 2216036 (published on 10.11.2003, PCT application WO 99/27478), No. 2216776 (published on 20.11.2003) and No. 2279127 (published on 27.06.2006) are deemed to be the most related to the presented Invention group. Each patent hereinabove mentioned specifies a method of promoted product follow-up, which lies in unique code assigned to each kind of goods at the production stage, stored in manufacturer's database and marked on ID card's surface so that it is concealed and thus prevented from an irrevocable revelation; then the ID card is attached to the product package. On each sale of the product the unique code is to be revealed and read out to verify it via manufacturer's database access.

The weakness of this technique and ID used to verify the product's authenticity is that the number of database accesses cannot be found out by the purchaser before such access, during the inspection of the product not purchased yet.

### DISCLOSURE OF INVENTION

The Invention is designed to provide an unambiguous and easy way to inform the purchaser about the number of times his/her purchase has been resold before, give the manufacturer any data required for its marketing efforts, guarantee the product's authenticity to distributors and consumers, and facilitate counterfeit prevention in the commodity market by supervisory authorities. It offers the effective method and means of following-up a promoted product with ease and speed, which are also proof against unfair acts.

Results aforementioned can be achieved with the first subject of this Invention via the following follow-up technology: a) one or more unique codes are assigned to each kind of goods at the production stage; b) the code(s) are based into manufacturer's database; c) each of the unique codes assigned is marked on a separate strip having its own sequence number; d) each strip is made on and/or attached to the ID card's front so that the code is concealed and thus prevented from an irrevocable revelation; e) the card's front is marked with information required to verify the product's authenticity through the unique code on one strip; f) the complete ID card is attached to the product or its package; g) on the next sale the unique code of the next strip left is revealed and read out; h) then one can use the information shown on the card's front, the unique code read out, and the sequence number of the strip bearing the relevant code to verify the product's authenticity via manufacturer's database.

A salient feature of the method described above is that unique codes can include figures and/or letters of any alphabet.

Strips marked with the unique codes designating the specific kind of goods shall be attached, one after another or one upon another, on the front of the card, which means that each strip is easily and irreparably separable.

Another distinctive feature of the technology invented is variety of ways possible to access the manufacturer's database.

In case of Internet access a user shall: a) access manufacturer's web address, which is shown on the card among other information, from PC via a secure link; b) select a webpage intended for card information entry; c) enter the unique code already read out on the next strip, as well as the strip's number, into the relevant box; d) compare the codes entered and stored in the database by means of the website software; e) display confirmation or denial of product's authenticity on the PC; f) save the strip's number, unique code and query data in the database; g) then delete the unique code verified from the database as soon as the PC gives acknowledgement of the response received.

In case of mobile access: a) send SMS or UDMS message containing the unique code and strip's number to the database address, which is shown on the card, from user mobile device; b) compare the codes entered and stored in the database by means of the database s/w; c) display confirmation or denial of product's authenticity on the device in a form of SMS or UDMS message; d) save the strip's number, unique code and query data in the database; e) delete the unique code verified from the database as soon as the mobile device gives acknowledgement of the response received.

In case of telephone access: a) forward a call to the phone number, which is shown on the card; b) give a call-center operator the unique code already read out on the strip and the strip's number; c) then the operator accesses the manufacturer's database website via the secure link and enters the code and number given into the relevant box; d) compares the codes entered and stored in the database by means of the database s/w; e) displays confirmation or denial of product's authenticity on the operator's PC and relays the response to user's phone number and/or sends it to the email address given by the user; f) saves the strip's number, unique code and query data in the database; g) deletes the unique code verified from the database as soon as the user confirms the information receipt.

The same result can be achieved with the second invention subject via the ID in the form of the card designed to be attached to, or inserted into, the product's package and/or the product itself, on which product information can be printed. The card's front bears one or more irreparably separable strips with hidden unique codes, of which each can be revealed irreparably, and the information required for product's authenticity verification through the unique code revealed on the strip next in turn.

The salient feature of the ID described above is that each strip has an extension tip designed to facilitate the strip's tearing off the card.

Each unique code is concealed by a non-transparent layer on the strip's front so that the layer shall irreparably reveal the code if removed, or on the back of each strip, in which case the code shall be irreparably revealed as soon as the strip is torn off.

Another distinctive feature of the ID presented by the Invention is an adhesive layer applied on the card's back and meant to attach the card to the product's or package's surface or its data sheet.

### BRIEF DESCRIPTION OF DRAWINGS

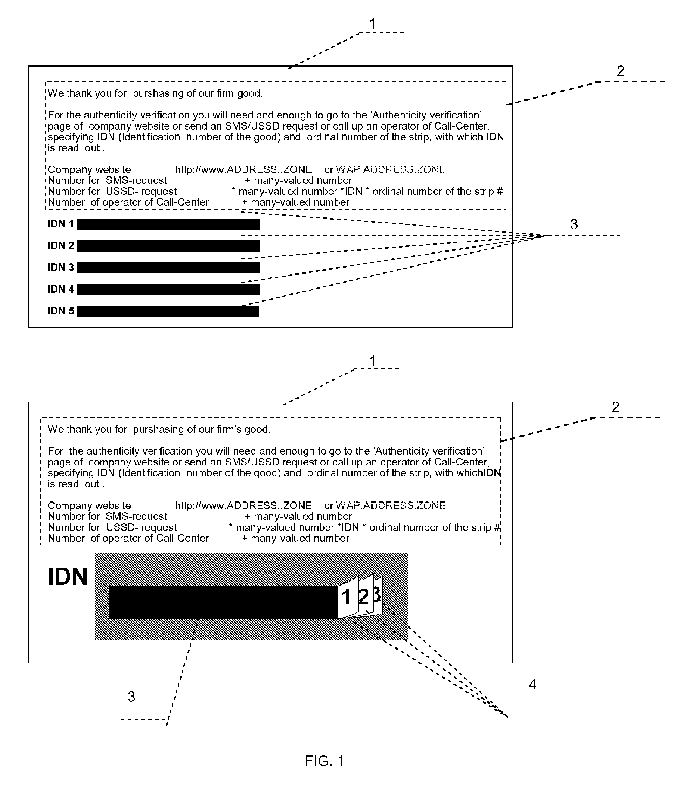

Fig. 1 represents appearance of the ID presented by the Invention.
Fig. 2 shows the application algorithm of the created technology.
The technology presented shall be applied through the ID shown on Fig. 1. The standard credit card-sized ID is made of plastic, cardboard, etc. and shaped as the card. Various ID sizes are possible, though; the only prerequisite is that ID card's 1 front shall accommodate all the information 2 necessary and also make a room for strips 3 described hereunder. Information 2 shall be printed on card 1 and be of a kind which can help in product's authenticity verification through the unique code marked on the relevant strip 3.

The back of card 1 can bear the adhesive layer intended to attach the card to the product's or package's surface or its data sheet.

Each of strips 3 bears a unique code, which has been assigned to the kind of goods at or after the production stage. The code is concealed by a non-transparent layer, such as the protective lattice, which can be removed irreparably to reveal the unique code. Alternatively, the unique code can be marked on each strip's 3 back, while strips 3 are affixed to the front of card 1 and can be torn off irreparably. Such irreparable separation is also possible if it is the front of strip 3 which is marked with the unique code hidden under the nontransparent layer, as above.

Strips 3 can be made of any appropriate polymer, such as PVC, Teflon, etc. Strips 3 are affixed (attached, stuck) to the front of card 1 one upon another or one after another. In order to facilitate the strip's separation off card 1 each strip 3 has extension tip 4, which emerges loose from the surface of card 1. Either tips 4 or strips 3 (if tip 4 is not provided) have sequence numbers, the purpose of which is specified below.

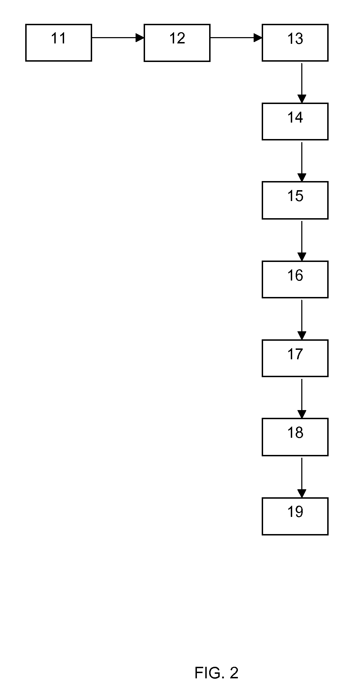

The presented technology shall be applied through the ID shown on Fig. 1 on the basis of the algorithm represented by Fig. 2.

Step 11 of the said algorithm is when one or more unique codes shall be assigned to the kind of goods at the production stage. The unique codes assigned are then based into the manufacturer's database, which constitutes step 12. The database, as well as its DBMS, is stored in relevant server data memory belonging to the manufacturer itself or to a company providing a hosting service. The database can be of any common or new design and in no way effects the application of the technology presented.

When proceeding to step 13, each unique code assigned to this kind of goods is marked on the relevant strip (No. 3 on Fig. 1), which has its own number. The strip is designed so as to keep the code concealed (step 14). Alternatively, the strip can be affixed to the ID card's front so that the code marked remains hidden (step 15). The unique code marking is done so as to provide its irrevocable revelation after removal of the nontransparent layer, if the code is on the front of strip 3 or, in case of its being on the strip's back, when strip 3 is torn off the card surface.

Step 16 comprises marking the card with the information required to verify the product's authenticity through the unique code revealed on one strip. Then the complete ID card is attached to the product, its package or data sheet, and thus step 17 is taken.

On the next sale or resale of the product one shall reveal and read out the unique code, which is marked on the next strip 3 left (step 18). Then (step 19) one can verify the product's authenticity via manufacturer's database using the information printed on the card's front, the unique code read out, and the number of the strip, which bears the relevant code.

As mentioned above, strips 3 may be affixed one upon another on the front of card 1, thus providing irreparable separation of each next strip 3 from card 1. The strip torn off is used to verify the product's authenticity, while other strips 3 remain intact. If this is the case, the unique code should be conveniently marked on the back of strip 3. Alternatively, strips 3 may be affixed one after another (in parallel, etc.) on the front of card 1. Then the unique code can be marked on the back of each strip 3, too. However, if the code is marked on the front of strip 3 and concealed by the nontransparent layer, while the strips are affixed to the card one after another, the layer can be removed from strip 3 surface w/o the strip's being torn off card 1 but, if so, the strip with the code revealed shall be removed during the next verification to get access to the next, unused and unrevealed unique code.
Any purchaser can verify the authenticity of the product purchased using any of the three (or even more) ways described in information 2, which is printed on card 1.

### BEST MODE FOR CARRYING OUT THE INVENTION

In case of Internet access a user shall:
i) Access manufacturer's web address, which is shown on card 1 among information 2, from PC via a secure link; ii) Select the webpage intended for card information entry; iii) Enter the unique code already read out on strip 3 at step 18, as well as strip's 3 number (if any), into the relevant box; iv) The website software (s/w) shall compare the codes entered and stored in the database and; v) Display confirmation or denial of product's authenticity on the PC; vi) Strip's 3 number, unique code and query data (such as query date, user IP and email address, phone number, etc.) are saved in the database by the same s/w; vii) As soon as the PC gives acknowledgement of the response received the unique code verified shall be deleted from the database.

In case of mobile access the user shall:
i) Send SMS or UDMS message containing the unique code found on strip 3 and strip's 3 number to the database address, which is shown on the card's front, from user mobile device (phone, etc.); ii) The database s/w shall compare the codes entered and stored in the database the same way as with Internet access and; iii) Display confirmation or denial of product's authenticity on the device in the form of SMS or UDMS message; iv) As defined above, strip's 3 number, unique code and query data are saved in the database; v) As soon as the mobile device gives acknowledgement of the response received, the unique code verified shall be deleted from the database by s/w tools.

And in case of telephone access:
i) Forward a call to the phone number, which is shown on the card's front; ii) Give the call-center operator the unique code already read out on strip 3 and strip's 3 number; iii) Then the operator accesses the manufacturer's database website via the secure link and enters the code and number given into the relevant box; iv) The database s/w shall compare the codes entered and stored in the database the same way as with user's Internet access and; v) Display confirmation or denial of product's authenticity on the operator's PC; vi) The operator relays the response to user's phone number or sends it to the email address given by the user; vii) Strip's 3 number, unique code and query data are saved in the database; viii) As soon as the user confirms the information received, the unique code verified shall be deleted from the database by s/w tools.

Please note that each unique code is a line of figures and letters of any alphabet, which is generated on random numbers basis.
Example: 43534hkdg13kkjhjkhkj.

In order to gain information about the goods' movement, which may be required for a marketing research, the manufacturer should provide editable boxes on its webpage to allow data entering by consumers. Entry boxes shall be as follows: Name, Given Name(s), Age, Sex, Country, City, and/or any other information needed for the manufacturer's marketing research. For convenience purposes, two entry boxes for consumer's email address are advisable, the first of which is for the email address and the second, for its validation. Such option will guarantee the response (confirmation or denial of the product's authenticity) coming to hand at the email address given accurately.

Sequence numbers of strips 3 ensure resale transactions counting.

Examples hereinbefore given and explained are just particular embodiments. As any knowledgeable person can see, there are a lot of modifications and alterations possible within the scope of the Invention, which is presented concisely through its claims and equivalent summary given below.

## Claims

1. This is the technology of a promoted product follow-up, which includes:
- assignment of a number of unique codes to any kind of goods at the production stage;
- basing the codes assigned into the manufacturer's database;
- marking each code assigned on one of separable strips having its own sequence number;
- make and/or attach each strip on the ID card's front so that the code is concealed and thus prevented from an irrevocable revelation;
- mark the card's front with information required to verify the product's authenticity through the unique code when revealed on a strip;
- attach the complete ID card to the product, its package or data sheet;
- on the next sale reveal and read out the unique code, which has been marked on the next strip left;
- use the information marked on the card's front, the unique code read out, and the sequence number of the strip bearing the relevant code to verify the product's authenticity via manufacturer's database.

2. The same method as hereinabove described in P.1, but with the unique codes including figures and/or letters of any alphabet.

3. The same method as hereinabove described in P.1, but with such strip affixture order that the strips bearing the unique codes are affixed one upon another on the card's front, thus providing irreparable separation of each next strip.

4. The same method as hereinabove described in P.1, but with such strip affixture order that the strips bearing the unique codes are affixed one after another on the card's front, thus allowing irreparable separation of each next strip.

5. The same method as hereinabove described in p.1, with Internet access to the manufacturer's database to be gained as follows:
- Access manufacturer's web address, which is shown on the card among other information, from PC via a secure link;
- Select the webpage intended for card information entry;
- Enter the unique code already read out on the next strip, as well as the strip's number, into the relevant box;
- Compare the codes entered and stored in the database by means of the website s/w;
- Display confirmation or denial of product's authenticity on the PC;
- Save the strip's number, unique code and query data in the database;
- Delete the unique code verified from the database as soon as the PC gives acknowledgement of the response received.

6. The same method as hereinabove described in P.1, with mobile access to the manufacturer's database to be gained as follows:
- Send SMS or UDMS message containing the unique code and strip's number to the database address, which is shown on the card, from user mobile device;
- Compare the codes entered and stored in the database by means of the database s/w;
- Display confirmation or denial of product's authenticity on the device in the form of SMS or UDMS message;
- Save the strip's number, unique code and query data in the database;
- Delete the unique code verified from the database as soon as the mobile device gives acknowledgement of the response received.

7. The same method as hereinabove described in P.1, with phone access to the manufacturer's database to be gained as follows:
- Forward a call to the phone number, which is shown on the card;
- Give the call-center operator the unique code already read out on the strip and the strip's number;
- Then the operator accesses the manufacturer's database website via the secure link and enters the code and number given into the relevant box;
- Compares the codes entered and stored in the database by means of the database s/w;
- Displays confirmation or denial of product's authenticity on the operator's PC and relays the response to user's phone number and/or sends it to the email address given by the user;
- Saves the strip's number, unique code and query data in the database;
- Deletes the unique code verified from the database as soon as the user confirms the information receipt.

8. The ID designed for promoted product follow-up is made in the shape of the card meant to be attached to, or inserted into, the product's package and/or the product itself, on which product information can be printed. The card's front bears irreparably separable strips having relevant sequence numbers and bearing hidden unique codes, which have been assigned to the specific kind of goods at the production stage. Each of the codes can be revealed irrevocably, and in order to verify the product's authenticity the consumer shall use the information printed on the card's front, the unique code revealed and read out, and the strip's number.

9. The same ID as hereinabove described in P. 8, but with extension tip provided for each strip and meant to facilitate the strip's separation off the card.

10. The same ID as hereinabove described in P. 8 or P. 9, but with the unique codes marked on strips' front sides and concealed by nontransparent layers so as to provide the irreparable revelation of the code after the layer removal.

11. The same ID as hereinabove described in P. 8 or P. 9, but with the unique codes marked on strips' back sides so as to provide the irreparable revelation of the code after the strip separation.

12. The same ID as hereinabove described in P. 8, but with the adhesive layer applied on the card's back and meant to attach the card to the product's or package's surface or its data sheet.
